# FASCICULE DE BREVET EUROPEEN

(11) **EP 0 998 478 B1**
(45) Date de publication et mention de la délivrance du brevet: **09.10.2002**
(21) Numéro de dépôt: 98936450.0
(22) Date de dépôt: 06.07.1998
(51) Int. Cl.: C07F 7/22, C08F 4/16, C07F 3/06, C07F 7/10

(54) **COMPLEXES METALLIQUES AVEC UN LIGAND TRIDENTATE COMME CATALYSEURS DE POLYMERISATION**
METAL-KOMPLEXE MIT EINEM TRIDENTATLIGAND ALS POLYMERISATIONSKATALYSATOREN
METAL COMPLEXES WITH A TRIDENTATE LIGAND AS POLYMERISATION CATALYSTS

(30) Priorité: 08.07.1997 EP 97401621
(43) Date de publication de la demande: 10.05.2000
(73) Titulaire: SOCIETE DE CONSEILS DE RECHERCHES ET D'APPLICATIONS SCIENTIFIQUES (S.C.R.A.S.), 75016 Paris (FR); CENTRE NATIONAL DE LA RECHERCHE SCIENTIFIQUE, 75016 Paris Cédex (FR)
(72) Inventeur: BERTRAND, Guy, F-31320 Pechbusque (FR); CAZAUX, Jean-Bernard, F-30390 Aramon (FR); FAURE, Jean-Luc, F-31200 Toulouse (FR); NGUYEN, Hanh, Cité Universitaire - Ponsan Bellevue, F-31400 Toulouse (FR); REAU, Régis, F-31400 Toulouse (FR)
(74) Mandataire: Bourgouin, André
(86) Numéro de dépôt international: FR9801433
(87) Numéro de publication internationale: WO99002536

(56) Documents cités:
- US-A- 5 344 948
- EMIG N ET AL: "Synthesis and Structure of the First Chiral Tetracoordinated Aluminum Cation" J. AM. CHEM. SOC. (JACSAT,00027863);96; VOL.118 (24); PP.5822-5823, XP002048800 CNRS;LABORATOIRE DE CHIMIE DE COORDINATION; TOULOUSE; 31077; FR. (FR)
- F. GEOFFREY N. CLOKE: "Zirconium Complexes incorporating the new Tridentate Diamide Ligand ((Me3Si)N(CH2CH2N(SiMe3))2)2- (L)." JOURNAL OF THE CHEMICAL SOCIETY, DALTON TRANSACTIONS., no. 1, 1995 - 7 janvier 1995, pages 25-30, XP002048801 LETCHWORTH GB cité dans la demande

## Description

La présente invention concerne de nouveaux composés possédant un élément du groupe 11, 12 ou 14 et possédant un ligand tridentate, un procédé pour leur préparation et leur utilisation notamment en tant que catalyseur de polymérisation.

Il a été montré que chaque type de catalyseurs utilisés pour les polymèrisations ou copolymèrisations, donne respectivement des polymères ou des copolymères différents notamment en raison de réactions de transestériflcation qui conduisent à des inversions des centres stéréogènes (Jedlinski et coll., Macromolecules, (1990) 191, 2287 ; Munson et coll., Macromolecules, (1996) 29, 8844 ; Montaudo et coll., Macromolecules, (1996) 29, 6461). Le problème est donc de trouver des systèmes catalytiques nouveaux afin d'obtenir de nouveaux polymères ou copolymères, et plus particulièrement des copolymères séquencés. L'utilisation de systèmes catalytiques permettant d'obtenir des copolymères séquencés, permet le contrôle de l'enchaînement des monomères afin d'obtenir des copolymères spécifiques possédant des propriétés propres. Ceci est particulièrement intéressant pour les copolymères biocompatibles dont la biodégradation est influencée par cet enchaînement.

L'invention a ainsi pour objet les produits de formule générale 1 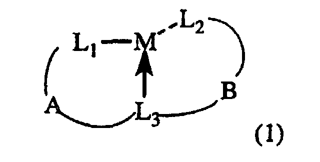 dans laquelle
- M: représente un élément des groupes 11, 12 ou 14 ;
- A et B: représentent, indépendamment, une chaîne carbonée de 2 à 4 atomes de carbone, optionnellement substituée par l'un des radicaux substitués (par un ou plusieurs substituants identiques ou différents) ou non substitués suivants : alkyle, cycloalkyle ou aryle, dans lesquels ledit substituant est un atome d'halogène, le radical alkyle, nitro ou cyano ;
- L₁, L₂ et L₃: représentent, indépendamment, un groupe de formule -E₁₅(R₁₅)- dans laquelle
E₁₅ est un élément du groupe 15 et
R₁₅ représente l'atome d'hydrogène ; l'un des radicaux substitués (par un ou plusieurs substituants identiques ou différents) ou non-substitués suivants : cycloalkyle ou aryle, dans lesquels ledit substituant est un atome d'halogène, le radical alkyle, nitro ou cyano ; un radical de formule RR'R"E₁₄- dans laquelle E₁₄ est un élément du groupe 14 et R, R' et R" représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule SO₂R'₁₅ dans laquelle R'₁₅ représente un atome d'halogène, un radical alkyle, haloalkyle ou aryle éventuellement substitué par un ou plusieurs substituants choisis parmi les radicaux alkyle, haloalkyle et halogène.

Dans les définitions indiquées ci-dessus, l'expression halogène représente un atome de fluor, de chlore, de brome ou d'iode, de préférence chlore. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle.

Le terme haloalkyle désigne de préférence les radicaux dans lesquels le radical alkyle est tel que défini ci-dessus et est substitué par un ou plusieurs atomes d'halogène tel que défini ci-dessus comme, par exemple, bromoéthyle, trifluorométhyle, trifluoroéthyle ou encore pentafluoroéthyle. Les radicaux alkoxy peuvent correspondre aux radicaux dans lesquels le radical alkyle est tel que défini ci-dessus. On préfère les radicaux méthoxy, éthoxy, isopropyloxy ou tert-butyloxy. Les radicaux alkylthio représentent de préférence les radicaux dans lesquels le radical alkyle est tel que défini ci-dessus comme, par exemple, méthylthio ou éthylthio.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentanediène, cyclohexadiène. Les radicaux cycloalkoxy peuvent correspondre aux radicaux dans lesquels le radical cycloalkyle est tel que défini ci-dessus. On préfère les radicaux cyclopropyloxy, cyclopentyloxy ou cyclohexyloxy. Les radicaux cycloalkylthio peuvent correspondre aux radicaux dans lesquels le radical cycloalkyle est tel que défini ci-dessus comme par exemple cyclohexylthio.

Les radicaux aryles peuvent être de type mono ou polycycliques. Les radicaux aryles monocycliques peuvent être choisis parmi les radicaux phényle optionnellement substitué par un ou plusieurs radicaux alkyle, tel que tolyle, xylyle, mésityle, cuményle. Les radicaux aryles -polycycliques peuvent être choisis parmi les radicaux naphtyle, anthryle, phénanthryle. Les radicaux aryloxy peuvent correspondre aux radicaux dans lesquels le radical aryle est tel défini ci-dessus. On préfère les radicaux phénoxy, 2,4,6-tritertiobutylphénoxy, tolyloxy ou mésityloxy. Les radicaux arylthio désignent de préférence les radicaux dans lesquels le radical aryle est tel que défini ci-dessus comme par exemple dans phénylthio.

Les composés de formule I peuvent se présenter sous forme de monomère ou de dimère et plus particulièrement, les composés de formule I dans laquelle M représente un atome de zinc se présentent généralement sous forme de dimère.

L'invention a plus particulièrement pour objet les produits de formule générale 1 telle que définie ci-dessus, caractérisée en ce que
M représente un atome d'étain ou de zinc ;
A et B représentent, indépendamment, une chaîne carbonée de 2 à 4 atomes de carbone, et notamment une chaîne carbonée de 2 atomes de carbone ;
L₁, L₂ et L₃ représentent, indépendamment, un radical de formule -E₁₅(R₁₅)- dans laquelle E₁₅ est un atome d'azote ou de phosphore et R₁₅ représente un radical de formule RR'R"E₁₄- dans laquelle E₁₄ représente un atome de carbone ou de silicium et R, R' et R" représentent, indépendamment, l'atome d'hydrogène ou un radical alkyle ou aryle et de préférence l'atome d'hydrogène ou un radical alkyle.

De préférence, M représente un atome d'étain ou de zinc ; A et B représentent, indépendamment, une chaîne carbonée de 2 atomes de carbone ; L₁, L₂ et L₃ représentent, indépendamment, un radical de formule -E₁₅(R₁₅)- dans laquelle E₁₅ est un atome d'azote et R₁₅ représente un radical de formule RR'R"E₁₄- dans laquelle E₁₄ représente un atome de carbone ou de silicium et R, R' et R" représentent, indépendamment, l'atome d'hydrogène ou un radical méthyle, éthyle, propyle ou isopropyle.

Plus particulièrement, l'invention a pour objet les produits décrits ci-après dans les exemples, en particulier les produits répondant aux formules suivantes :
- [(Me₂CHNCH₂CH₂)₂NMe]Sn ;
- [(Me₃SiNCH₂CH₂)₂NMe]Sn ;
- [(Me₃SiNCH₂CH₂)₂NMe] Zn.

L'invention a également pour objet un procédé de préparation des produits de formule générale 1 telle que définie ci-dessus, caractérisé en ce que l'on fait réagir un produit de formule I

(L₁-A-L₃-B-L₂)²⁻ , 2Y⁺ (I)

dans laquelle L₁, A, L₃, B et L₂ ont les significations indiquées ci-dessus et Y représente un groupement organométallique, un métal ou l'atome d'hydrogène, avec un produit de formule II

MZ₁Z₂ (II)

dans laquelle M a la signification indiquée ci-dessus et Z₁ et Z₂ représentent, indépendamment, un groupe partant, pour obtenir un produit de formule 1 telle que définie ci-dessus.

Le composé de formule I peut également s'écrire sous la forme non-ionique suivante Y-L₁-A-L₃-B-L₂-Y (I'). Lorsque Y représente l'atome d'hydrogène, les produits de formule (I) se présentent généralement sous la forme I'.

La réaction d'un composé de formule générale I avec un composé de formule générale II pour obtenir un composé de formule générale 1, peut être réalisée sous atmosphère inerte telle sous atmosphère de fréon ou d'argon, dans un solvant aprotique, à une température comprise entre -90 et +50 °C. Les composés 1 ainsi obtenus sont purifiés par les méthodes classiques de purification.

En tant que solvant aprotique, on peut utiliser les hydrocarbures aromatiques tels que benzène, toluène ; des hydrocarbures aliphatiques tels que pentane, heptane, hexane, cyclohexane ; des éthers tels que le diéthyléther, dioxane, tétrahydrofurane, éthyltertiobutyl éther, des solvants chlorés tels que dichlorométhane ou chloroforme.

Dans les composés I, Y représente un groupement organométallique, un métal ou l'atome d'hydrogène. Le groupement organométallique peut être un composé de formule R"'M₁ ou R"'₃M₂ dans laquelle R"' représente un radical alkyle, cycloalkyle, aryle, alkoxy, cycloalkoxy ou aryloxy défini comme précédemment, M₁ est un atome de zinc ou de mercure et M₂ un atome d'étain ou de plomb ; de préférence, le groupement organométallique est choisi parmi les groupements ZnMe, SnMe₃, SnBu₃ ou PbMe₃. Le métal peut être un métal alcalin choisi parmi le lithium, le sodium ou le potassium, ou un métal alcalino-terreux tel que le magnésium.

Dans les composés II, Z₁ et Z₂ représentent, indépendamment un groupe partant tel qu'un atome d'halogène, un groupement alkyle, cycloalkyle, alkoxy, aryle ou aryloxy défini comme précédemment, ou encore un méthanesulphonyloxy, un benzènesulphonyloxy, p-toluènesulphonyloxy.

Les produits de départ de formule I sont des produits connus ou peuvent être préparés à partir de produits connus. Pour leur synthèse, on peut citer les références suivantes : Cloke et coll., J. Chem. Soc., Dalton Trans. (1995) 25; Wilkinson and Stone, Comprehensive Organometallic Chemistry (1982) vol. 1,557.

Les produits de formule II sont commerciaux ou peuvent être fabriqués par les méthodes connues de l'homme de métier.

L'invention a également pour objet l'utilisation des produits de formule 1 telle que définie ci-dessus, en tant que catalyseurs pour la mise en oeuvre de (co)polymérisation, c'est à dire de polymérisation ou copolymérisation. Lors de la mise en oeuvre de (co)polymérisation, les composés selon l'invention jouent également le rôle d'initiateur ou de régulateur de chaîne.

Les composés de formule 1 sont particulièrement intéressants pour la mise en oeuvre de polymérisation d'hétérocycles. Les hétérocycles peuvent contenir un ou plusieurs hétéroatomes des groupes 15 et/ou 16, et posséder une taille allant de trois à huit chaînons. A titre d'exemple d'hétérocycles répondant à la formulation ci-avant, on peut citer les époxydes, les thioépoxydes, les esters ou thioesters cycliques tels que les lactones, les lactames et les anhydrides.

Les composés de formule 1 sont particulièrement intéressants également pour la mise en oeuvre de (co)polymérisation d'esters cycliques. A titre d'exemple d'esters cycliques, on peut citer les esters cycliques dimères de l'acide lactique et/ou glycolique (lactide et glycolide). Des copolymères aléatoires ou séquencés peuvent être obtenus selon que les monomères sont introduits ensemble au début de la réaction, ou séquentiellement au cours de la réaction.

L'invention a également pour objet un procédé de préparation de copolymères, aléatoires ou séquencés, ou de polymères qui consiste à mettre en présence un ou plusieurs monomères, un initiateur de chaînes, un catalyseur de polymérisation et éventuellement un solvant de polymérisation, le dit procédé caractérisé en ce que l'initiateur de chaînes et le catalyseur de polymérisation sont représentés par le même composé qui est choisi parmi les composés de formule (1) telle que définie ci-dessus.

La (co)polymérisation peut s'effectuer soit en solution soit en surfusion. Lors que la (co)polymérisation s'effectue en solution, le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures saturés ou aromatiques, les éthers, les halogénures aliphatiques ou aromatiques.

Les réactions sont conduites à des températures comprises entre la température ambiante et environ 250 °C ; la plage de température comprise entre 40 et 200 °C s'avère plus avantageuse. Les durées de réaction sont comprises entre 1 et 300 heures, et de préférence entre 1 et 72 heures.

Ce procédé de (co)polymérisation convient particulièrement bien pour l'obtention de (co)polymères d'esters cycliques, notamment les esters cycliques dimères de l'acide lactique et/ou glycolique. Les produits obtenus tels que le copolymère lactique glycolique, biodégradables, sont avantageusement utilisés comme support dans des compositions thérapeutiques à libération prolongée. Le procédé convient particulièrement bien également à la polymérisation des époxydes, notamment de l'oxyde de propylène. Les polymères obtenus sont des composés qui peuvent être utilisés pour la synthèse de cristaux liquides organiques ou encore comme membranes semi-perméables.

L'invention concerne également des polymères ou copolymères susceptibles d'être obtenus par la mise en oeuvre d'un procédé tel que décrit ci-dessus. La polydispersité (Mw/Mn) des (co)polymères ainsi obtenus peut être modifiée en laissant le mélange réactionnel à la température de la réaction après que la conversion du (des) monomère(s) soit totale. Les masses des (co)polymères sont peu affectées lors de ce processus. Ces phénomènes sont dûs à des réactions de transestérifications inter- ou intra-moléculaires (Kiecheldorf et coll., Macromolecules, (1988) 21, 286).

Les exemples suivants sont présentés pour illustrer les procédures ci-dessus et ne doivent en aucun cas être considérés comme une limite à la portée de l'invention.

### Exemple 1: [(Me₂CHNCH₂CH₂)₂NMe]Sn

### M = Sn ; A = B = -CH₂CH₂- ; L₁ = L₂ = NCHMe₂ ; L₃ = NMe

Dans un tube de Schlenk muni d'un barreau aimanté et purgé sous argon, on introduit successivement 1,00 g (4,7 mmol) de [(Me₂CHNCH₂CH₂)₂NMe]²⁻, 2Li⁺ et 20 ml de diéthyléther. Le mélange réactionnel est refroidi à -78 °C, puis on introduit une suspension de 0,89 g (4,7 mmol) de SnCl₂ dans du diéthyléther. Le mélange réactionnel est ramené à température ambiante puis laissé sous agitation pendant 18 heures à température ambiante. La solution est filtrée et le solvant évaporé. Le composé souhaité est isolé sous forme d'une huile jaune (rendement 74 %). Ce composé est caractérisé par spectroscopie RMN du carbone, du proton et de l'étain.

RMN ¹H (C₆D₆ ; 250 MHz) : 1,49 (d, J_{HH} = 6,2 Hz, 6H, CHCH₃) ; 1,54 (d, J_{HH} = 6,2 Hz, 6H, CHCH₃) ; 2,11 (s, 3H, J_{119_{SnC}} = 20,2 Hz, J_{117_{SnC}} = 17,5 Hz, NCH₃) ; 2,37 (m, 4H, CH₂) ; 3,11 (m, 2H, CH₂) ; 3,67 (sept, J_{HH} = 6,2 Hz, 2H, CHCH₃)

RMN ¹³C (C₆D₆ ; 62,896 MHz) : 26,64 (s, CHCH₃) ; 26,93 (s, CHCH₃) ; 49,05 (s, J_{SnC} = 53,5 Hz, NCH₃) ; 54,64 (s, CH₂) ; 55,04 (s, CHCH₃) ; 63,32 (s, CH₂).

RMN ¹¹⁹Sn (C₆D₆ ; 32,248 MHz) : 121,13 (ν_{1/2} = 600 Hz).

### Exemple 2 : [(Me₃SiNCH₂CH₂)₂NMe]Sn

### M = Sn ; A = B = -CH₂CH₂- ; L₁ = L₂ = NSiMe₃ ; L₃ = NMe

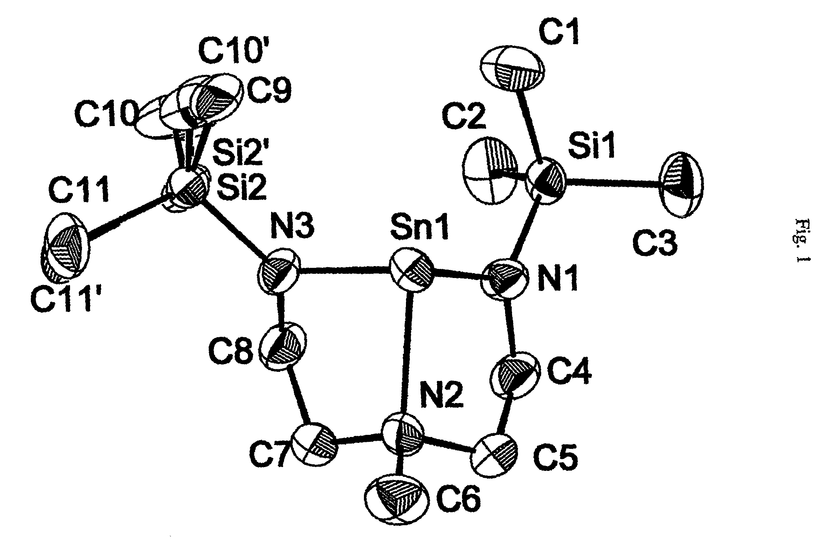

Dans un tube de Schlenk muni d'un barreau aimanté et purgé sous argon, on introduit successivement 1,22 g (4,7 mmol) de [(Me₃SiNCH₂CH₂)₂NMe]²⁻, 2Li⁺ et 20 ml de diéthyléther. Le mélange réactionnel est refroidi à -78 °C, puis on introduit une suspension de 0,89 g (4,7 mmol) de SnCl₂ dans du diéthyléther. Le mélange réactionnel est ramené à température ambiante puis laissé sous agitation pendant 2 heures à température ambiante. La solution est filtrée, le solvant évaporé et le résidu traité au pentane. Après évaporation du solvant, une huile orange est obtenue. Le composé souhaité est isolé sous forme de cristaux blancs par cristallisation à -20°C dans du toluène (5 ml) (rendement 80 %). Ce composé est caractérisé par spectroscopie de résonnance magnétique multinucléaire et diffraction des rayons-X (Figure 1 et tableau 1 ci-dessous). Point de fusion 20 °C.

### Exemple 3 : [(Me₃SiNCH₂CH₂)₂NMe] Zn (sous forme de dimère)

### M = Zn ; A = B = -CH₂CH₂- ; L₁ = L₂ = NSiMe₃ ; L₃ = NMe

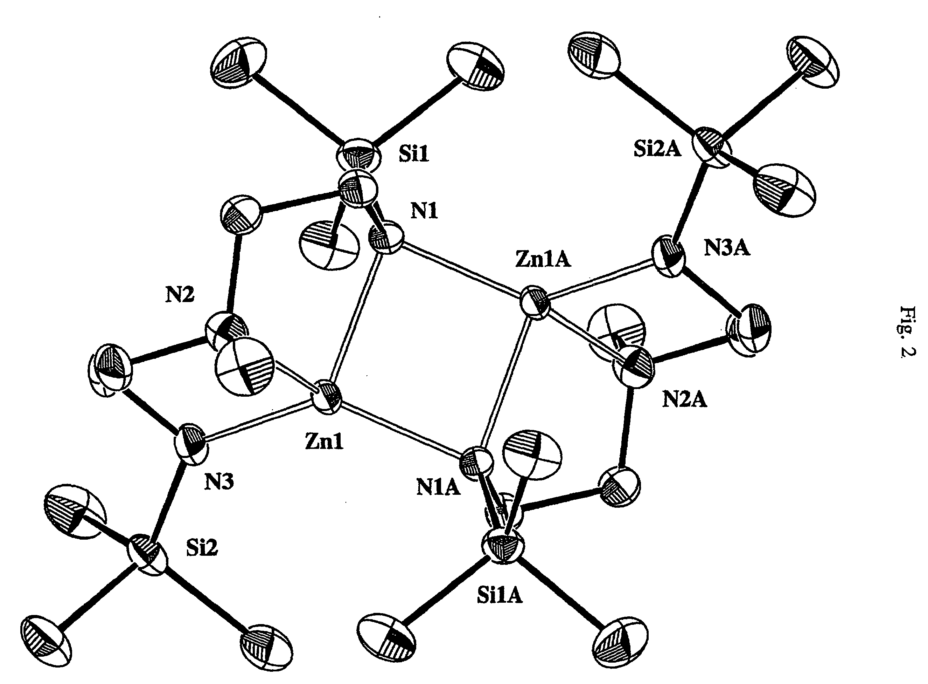

Dans un Schlenk muni d'un barreau aimanté et purgé sous argon, on introduit 1,1 g (4,2 mmol) de (Me₃SiNHCH₂CH₂)₂NMe et 20 ml de toluène. Le mélange réactionnel est refroidi à -78°C, puis on introduit 2,1 ml de ZnMe₂ (2 M, 4,2 mmole). Le mélange réactionnel est ramené à température ambiante puis laissé sous agitation pendant 3h. Le solvant est ensuite évaporé. On obtient une huile jaune foncé.On chauffe encore cette huile à 110°C pendant 4h. Le composé souhaité est lavé avec 5 ml de pentane (3 fois) et isolé sous forme de cristaux blancs (rendement 75%). Ce composé est caractérisé par spectrocopie RMN et diffraction des rayons X (Figure 2 et tableau 2 ci-dessous).

RMN ¹H (C₆D₆ ; 250 MHz): 0,25 (s, 18H, Si(CH₃)₃) ; 0,30 (s ,18H, Si(CH₃)₃) ; 2,11 (s, 6H, NCH₃) ; 2,24 (m, 8H, CH₂) ; 3,05 (m, 8H, CH₂).

RMN ¹³C (C₆D₆ ; 50,323 MHz) : 3,22 (s, Si(CH₃)₃) ; 3,28 (s, Si(CH₃)₃) ; 44,49 (s, NCH₃) ; 47,66 (s, CH₂) ; 47,72 (s, CH₂) ; 60,31 (s, CH₂) ; 65,91 ( s, CH₂).

### Exemple 4 : préparation d'un poly(D,L-lactide)

Dans un tube de Schlenk muni d'un barreau aimanté et purgé sous argon, on introduit successivement 0,08 g (0,21 mmol) de [(Me₃SiNCH₂CH₂)₂NMe]Sn, 6,67 g (46,3 mmol) de D,L-lactide et 70 ml de toluène. Le mélange réactionnel est laissé sous agitation à 75 °C pendant 2,5 heures. Le polymère est caractérisé par RMN du carbone et du proton ; la conversion du monomère est de 60 %. Selon une analyse par GPC (Gel Permea Chromatography) à l'aide d'un étalonnage réalisé à partir de standards de polystyrène (PS) de masses 761 à 400000, l'échantillon est composé de polymères ayant des masses voisines (Mw/Mn=1,43) et élevées (Mw = 62500).

### Exemple 5: préparation d'un poly(D,L-lactide)

Dans un tube de Schlenk muni d'un barreau aimanté et purgé sous argon, on introduit successivement 0,02 g (0,062 mmol) de [(Me₃SiNCH₂CH₂)₂NMe]Zn, 0,621 g (43,1 mmol) de D,L-lactide et 50 ml de toluène. Le mélange réactionnel est laissé sous agitation à 30 °C pendant 36 heures. Le polymère est caractérisé par RMN du carbone et du proton ; la conversion du monomère est de 92 %. Selon une analyse par GPC (Gel Permea Chromatography) à l'aide d'un étalonnage réalisé à partir de standards de polystyrène (PS) de masses 761 à 400000, l'échantillon est composé de polymères ayant des masses élevées (Mw = 34654).

### Exemple 6 : préparation d'un copolymère (D,L-lactide / glycolide) séquencé

Dans un tube de Schlenk muni d'un barreau aimanté et purgé sous argon, on introduit successivement 0,08 g (0,21 mmol) de [(Me₃SiNCH₂CH₂)₂NMe]Sn, 5,00 g (34,72 mmol) de D,L-lactide et 70 ml de toluène. Le mélange réactionnel est laissé sous agitation à 75°C pendant 4 heures. Une analyse par RMN du proton permet de vérifier que la conversion du monomère est supérieure à 95 %. A la solution précédente est ajouté 1,00 g (8,6 mmol) de glycolide. Le mélange réactionnel est laissé sous agitation à 75 °C pendant 1 heure. L'analyse d'un aliquot par RMN du proton montre qu'un copolymère est formé. Le rapport des intégrales des signaux correspondants à la partie polylactide (5,20 ppm) et polyglycolide (4,85 ppm) est de 8/1. Selon une analyse par GPC, à l'aide d'un étalonnage réalisé à partir de standards de PS de masses 761 à 400000, ce copolymère est un mélange de macromolécules (Mw/Mn = 2,35) de masses élevées (Mw = 68950).

### Exemple 7: modification de la polydispersité d'un copolymère (D,L-lactide / glycolide)

Un copolymère préparé selon l'exemple 4 (Mw/Mn = 2,35) est laissé à 75°C pendant 20 heures. L'analyse GPC d'un aliquot montre que la dispersité a augmentée et que la masse reste constante (Mw/Mn = 2,69 ; Mw = 68850). Le mélange est à nouveau abandonné 20 heures à 75°C. L'analyse GPC d'un aliquot montre que la dispersité commence à baisser et que la masse reste à peu près constante (Mw/Mn = 2,02 ; Mw = 65659). Après 40 heures supplémentaires de chauffage à 75°C, la polydispersité est de 1,53 pour des masses de 62906.

### Exemple 8 : préparation d'un copolymère (D,L-lactide / glycolide) aléatoire

Dans un tube de Schlenk muni d'un barreau aimanté et purgé sous argon, on introduit successivement 0,08 g (0,21 mmol) de [(Me₃SiNCH₂CH₂)₂NMe]Sn, 4,70 g (32,63 mmol) de D,L-lactide et 1,00 g (8,61 mmol) de glycolide. Le mélange réactionnel est chauffé à 178°C pendant 1,2 heures. Le polymère est caractérisé par RMN du carbone et du proton ; la conversion des monomères est totale. Selon une analyse par GPC, à l'aide d'un étalonnage réalisé à partir de standards de PS de masses 761 à 400000, l'échantillon est composé de polymères ayant une polydispersité (Mw/Mn) de 2,24 et des masses (Mw) de 21650.

### Exemple 9 : préparation d'un copolymère (D,L-lactide / glycolide) aléatoire ayant une composition lactide/ glycolide proche de 50/50

Dans un tube de Schlenk muni d'un barreau aimanté et purgé sous argon, on introduit successivement 0,01 g (0,031 mmol) de [(Me₃SiNCH₂CH₂)₂NMe]Zn, 5,55 g (38,5 mmol) de D,L-lactide et 1,91g (16,5 mmol) de glycolide. Le mélange réactionnel est laissé sous agitation à 180°C pendant 144 minutes. Une analyse par RMN du proton permet de vérifier que la conversion des monomère est de 76 % de lactide et 100% de glycolide. Le rapport des intégrales des signaux correspondants à la partie polylactide (5,20 ppm) et polyglycolide (4,85 ppm) permet d'évaluer la composition du copolymère à 46/54. Selon une analyse par GPC, à l'aide d'un étalonnage réalisé à partir de standards de PS de masses 761 à 400000, ce copolymère est un mélange de macromolécules (Mw/Mn = 1,82) de masses élevées (Mw = 36192).

### Exemple 10 : préparation d'un copolymère (D,L-lactide / glycolide) aléatoire de masses élevées ayant une composition lactide/ glycolide proche de 70/30

Dans un tube de Schlenk muni d'un barreau aimanté et purgé sous argon, on introduit successivement 0,015 g (0,046 mmol) de [(Me₃SiNCH₂CH₂)₂NMe]Zn, 13,3 g (92,4 mmol) de D,L-lactide et 3,1g (26,4 mmol) de glycolide. Le mélange réactionnel est laissé sous agitation à 180°C pendant 5 heures. Une analyse par RMN du proton permet de vérifier que la conversion des monomère est de 68 % de lactide et 100% de glycolide. Le rapport des intégrales des signaux correspondants à la partie polylactide (5,20 ppm) et polyglycolide (4,85 ppm) permet d'évaluer la composition du copolymère à 68% de lactide et 32% de glycolide. Selon une analyse par GPC, à l'aide d'un étalonnage réalisé à partir de standards de PS de masses 761 à 400000, ce copolymère est un mélange de macromolécules (Mw/Mn = 2,30) de masses élevées (Mw = 71281).

**Tableau 1:**

| longueur des liaisons sélectionnées (en Angström) et angles de liaison (en degré) pour le composé de l'exemple 2. | | | |
|---|---|---|---|
| Sn(1)-N(1) | 2,117(6) Å | C(4)-C(5) | 1,497 (11) Å |
| Sn(1)-N(2) | 2,323 (6) Å | C(5)-N(2) | 1,485 (10) Å |
| Sn(1)-N(3) | 2,082 (5) Å | N(2)-C(6) | 1,483 (10) Å |
| N(1)-Si(1) | 1,712 (6) Å | N(2)-C(7) | 1,488 (9) Å |
| N(3)-Si(2) | 1,706 (13) Å | C(7)-C(8) | 1,528 (11) Å |
| N(1)-C(4) | 1,458 (9) Å | C(8)-N(3) | 1,426 (9) Å |
| N(1)-Sn(1)-N(2) | 77,4(2)° | N(2)-Sn(1)-N(3) | 79,0 (2)° |
| Sn(1)-N(1)-C(4) | 116,7 (4) ° | Sn(1)-N(3)-C(8) | 109,4 (4) ° |
| N(3)-Sn(1)-N(1) | 98,1 (2) ° | | |

**Tableau 2:**

| longueur des liaisons sélectionnées (en Angström) et angles de liaison (en degré) pour le composé de l'exemple 3. | | | |
|---|---|---|---|
| Zn(1)-N(1) | 2,105 (2) | C(4)-C(5) | 1,523 (3) |
| Zn(1)-N(2) | 2,239 (2) | C(5)-N(2) | 1,479 (3) |
| Zn(1)-N(3) | 1,907 (2) | N(2)-C(6) | 1,473 (3) |
| Zn(1)-N(1)A | 2,025 (2) | N(2)-C(7) | 1,484 (3) |
| Si(1)-N(1) | 1,736 (2) | C(8)-N(3) | 1,465 (3) |
| N(3)-Si(2) | 1,694 (2) | C(7)-C(8) | 1,514 (3) |
| N(1)-C(4) | 1,492 (2) | N(1)-Zn(1)-N(1)A | 92,49 (6) |
| N(1)-Zn(1)-N(2) | 85,25 (6) | N(3)-Zn(1)-N(2) | 86,96 (7) |
| C(4)-N(1)-Zn(1) | 103,84(11) | C(8)-N(3)-Zn(1) | 106,13(12) |
| N(3)-Zn(1)-N(1) | 124,48 (7) | Zn(1)-N(1)-Zn(1)A | 87,51 (6) |

## Revendications

1. Les composés de formule générale 1 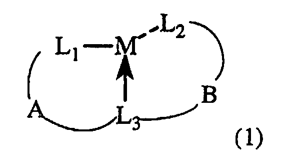 dans laquelle
M représente un élément des groupes 11, 12 ou 14 ;
A et B représentent, indépendamment, une chaîne carbonée de 2 à 4 atomes de carbone, optionnellement substituée par l'un des radicaux substitués ou non substitués suivants : alkyle, cycloalkyle ou aryle, dans lesquels ledit substituant est un atome d'halogène, un radical alkyle, nitro ou cyano ;
L₁, L₂ et L₃ représentent, indépendamment, un groupe de formule -E₁₅(R₁₅)- dans laquelle
E₁₅ est un élément du groupe 15 et
R₁₅ représente l'atome d'hydrogène ; l'un des radicaux substitués ou non-substitués suivants : cycloalkyle ou aryle, dans lesquels ledit substituant est un atome d'halogène, le radical alkyle, nitro ou cyano ; un radical de formule RR'R"E₁₄- dans laquelle E₁₄ est un élément du groupe 14 et R, R' et R" représentent, indépendamment, l'atome d'hydrogène ou l'un des radicaux substitués ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule SO₂R'₁₅ dans laquelle R'₁₅ représente un atome d'halogène, un radical alkyle, haloalkyle ou aryle éventuellement substitué par un ou plusieurs substituants choisis parmi les radicaux alkyle, haloalkyle et halogène.

2. Les composés de formule générale 1 telle que définie à la revendication 1, **caractérisée en ce que**
M représente un atome d'étain ou de zinc ;
A et B représentent, indépendamment, une chaîne carbonée de 2 à 4 atomes de carbone, et notamment une chaîne carbonée de 2 atomes de carbone ;
L₁, L₂ et L₃ représentent, indépendamment, un radical de formule -E₁₅(R₁₅)- dans laquelle E₁₅ est un atome d'azote ou de phosphore et R₁₅ représente un radical de formule RR'R"E₁₄- dans laquelle E₁₄ représente un atome de carbone ou de silicium et R, R' et R" représentent, indépendamment, l'atome d'hydrogène ou un radical alkyle ou aryle et de préférence l'atome d'hydrogène ou un radical alkyle.

3. Les composés de formule générale 1 telle que définie à l'une des revendications 1 à 2, **caractérisée en ce que**
M représente un atome d'étain ou de zinc ;
A et B représentent, indépendamment, une chaîne carbonée de 2 atomes de carbone ;
L₁, L₂ et L₃ représentent, indépendamment, un radical de formule -E₁₅(R₁₅)- dans laquelle E₁₅ est un atome d'azote et R₁₅ représente un radical de formule RR'R"E₁₄- dans laquelle E₁₄ représente un atome de carbone ou de silicium et R, R' et R" représentent, indépendamment, l'atome d'hydrogène ou un radical méthyle, éthyle, propyle ou isopropyle.

4. Les composés de formule générale 1 telle que définie à l'une des revendications 1 à 3 et répondant aux formules suivantes :
- [(Me₂CHNCH₂CH₂)₂NMe]Sn ;
- [(Me₃SiNCH₂CH₂)₂NMe]Sn ;
- [(Me₃SiNCH₂CH₂)₂NMe] Zn.

5. Procédé de préparation des produits de formule générale 1 telle que définie à la revendication 1, **caractérisé en ce que** l'on fait réagir un produit de formule I
(L₁-A-L₃-B-L₂)²⁻, 2Y⁺ I
dans laquelle L₁, A, L₃, B et L₂ ont les significations indiquées à la revendication 1 et Y représente un groupement organométallique, un métal ou l'atome d'hydrogène, avec un produit de formule II
MZ₁Z₂ (II)
dans laquelle M a la significations indiquées à la revendication 1 et Z₁ et Z₂ représentent, indépendamment, un groupe partant, pour obtenir un produit de formule 1.

6. Utilisation des produits de formule 1 telle que définie à l'une quelconque des revendications 1 à 4, en tant que catalyseur de polymérisation ou copolymérisation.

7. Utilisation selon la revendication 6 pour la polymérisation ou copolymérisation d'hétérocycles, notamment les époxydes tels que l'oxyde de propylène.

8. Utilisation selon la revendications 6, pour la polymérisation ou copolymérisation d'esters cycliques, notamment les esters cycliques dimères de l'acide lactique et/ou glycolique.

9. Procédé de préparation de copolymères, séquencés ou aléatoires, ou de polymères, qui consiste à mettre en présence un ou plusieurs monomères, un catalyseur de polymérisation et éventuellement un solvant de polymérisation, à une température comprise entre la température ambiante et 250 °C pendant 1 à 300 heures, ledit procédé **caractérisé en ce que** l'initiateur de chaînes et le catalyseur de polymérisation sont représentés par le même composé qui est choisi parmi les composés selon les revendications 1 à 4.

10. Procédé selon la revendication 9, **caractérisé en ce que** le monomère est choisi parmi les époxydes, et notamment l'oxyde de propylène, ou les esters cycliques, et notamment les esters cycliques dimères de l'acide lactique et/ou glycolique.

11. Polymères ou copolymères susceptibles d'être obtenus par la mise en oeuvre d'un procédé selon l'une des revendications 9 à 10.

## Patentansprüche

1. Verbindungen der allgemeinen Formel 1 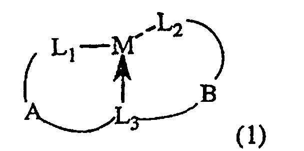 in der
- M ein Element der Gruppen 11, 12 oder 14 darstellt;
- A und B unabhängig voneinander eine kohlenstoffhaltige Kette mit 2 bis 4 Kohlenstoffatomen darstellen, die wahlweise durch einen der folgenden substituierten oder nicht substituierten Reste substituiert ist: Alkyl, Cycloalkyl oder Aryl, in denen der Substituent ein Halogenatom, ein Alkyl-, Nitro- oder Cyanorest ist;
- L₁, L₂ und L₃ unabhängig voneinander eine Gruppe der Formel -E₁₅(R₁₅)- darstellen, in welcher
E₁₅ ein Element der Gruppe 15 ist und
R₁₅ folgendes darstellt: ein Wasserstoffatom; einen der folgenden substituierten oder nicht substituierten Reste: Cycloalkyl oder Aryl, in denen der Substituent ein Halogenatom, ein Alkyl-, Nitro- oder Cyanorest ist; einen Rest der Formel RR'R"E₁₄-, in der E₁₄ ein Element der Gruppe 14 ist und R, R' und R" unabhängig voneinander ein Wasserstoffatom oder einen der folgenden substituierten oder nicht substituierten Reste darstellen: Alkyl, Cycloalkyl, Aryl, Alkoxy, Cycloalkoxy, Aryloxy, Alkylthio, Cycloalkylthio oder Arylthio, in denen der Substituent ein Halogenatom, ein Alkyl-, Nitro- oder Cyanorest ist; oder einen Rest der Formel SO₂R'₁₅, in der R'₁₅ ein Halogenatom, einen Alkyl-, Halogen-alkyl- oder Arylrest darstellt, der ggf. durch einen oder mehrere aus den Alkyl-, Halogenalkyl- und Halogenresten ausgewählten Substituenten substituiert ist.

2. Verbindungen der allgemeinen Formel 1 nach Anspruch 1, **dadurch gekennzeichnet, dass**
M ein Zinn- oder Zinkatom darstellt;
A und B unabhängig voneinander eine kohlenstoffhaltige Kette mit 2 bis 4 Kohlenstoffatomen, insbesondere eine kohlenstoffhaltige Kette mit zwei Kohlenstoffatomen, darstellen;
L₁, L₂ und L₃ unabhängig voneinander einen Rest der Formel -E₁₅(R₁₅)- darstellen, in der E₁₅ ein Stickstoff- oder Phosphoratom ist und R₁₅ einen Rest der Formel RR'R"E₁₄- darstellt, in der E₁₄ ein Kohlenstoff- oder Siliciumatom darstellt und R, R' und R" unabhängig voneinander ein Wasserstoffatom oder einen Alkyl- oder Arylrest und vorzugsweise ein Wasserstoffatom oder einen Alkylrest darstellen.

3. Verbindungen der allgemeinen Formel 1 nach einem der Ansprüche 1 bis 2, **dadurch gekennzeichnet, dass**
M ein Zinn- oder Zinkatom darstellt;
A und B unabhängig voneinander eine kohlenstoffhaltige Kette mit zwei Kohlenstoffatomen darstellen;
L₁, L₂ und L₃ unabhängig voneinander einen Rest der Formel -E₁₅(R₁₅)- darstellen, in der E₁₅ ein Stickstoffatom ist und R₁₅ einen Rest der Formel RR'R"E₁₄- darstellt, in der E₁₄ ein Kohlenstoff- oder Siliciumatom darstellt und R, R' und R" unabhängig voneinander ein Wasserstoffatom oder einen Methyl-, Ethyl-, Propyl- oder Isopropylrest darstellen.

4. Verbindungen der allgemeinen Formel 1 nach einem der Ansprüche 1 bis 3, die den folgenden Formeln entsprechen:
- [(Me₂CHNCH₂CH₂)₂NMe]Sn;
- [(Me₃SiNCH₂CH₂)₂NMe]Sn;
- [(Me₃SiNCH₂CH₂)₂NMe]Zn.

5. Verfahren zur Herstellung von Produkten der allgemeinen Formel 1 nach Anspruch 1, **dadurch gekennzeichnet, dass** man ein Produkt der Formel I
(L₁-A-L₃-B-L₂)²⁻,2Y⁺ (I),
in der L₁, A, L₃, B und L₂ die in Anspruch 1 angegebenen Bedeutungen haben und Y eine metallorganische Gruppe, ein Metall oder ein Wasserstoffatom darstellt, mit einem Produkt der Formel II
MZ₁Z₂ (II),
in der M die in Anspruch 1 angegebenen Bedeutungen hat und Z₁ und Z₂ unabhängig voneinander eine Abgangsgruppe darstellen, reagieren lässt, um ein Produkt der Formel 1 zu erhalten.

6. Verwendung der Produkte der Formel 1 nach einem der Ansprüche 1 bis 4 als Polymerisations- oder Copolymerisationskatalysator.

7. Verwendung nach Anspruch 6 für die Polymerisation oder Copolymerisation von Heterocyclen, insbesondere Epoxiden, wie z.B. Propylenoxid.

8. Verwendung nach Anspruch 6 für die Polymerisation oder Copolymerisation von cyclischen Estern, insbesondere dimeren cyclischen Estern der Milch- und/oder Glykolsäure.

9. Verfahren zur Herstellung von Block-Copolymeren oder statistischen Copolymeren oder von Polymeren, das darin besteht, dass ein oder mehrere Monomere, ein Polymerisationskatalysator und ggf. ein Polymerisationslösungsmittel während 1 bis 300 Std. bei einer Temperatur zwischen der Raumtemperatur und 250°C zusammengebracht werden, wobei dieses Verfahren **dadurch gekennzeichnet ist, dass** der Ketteninitiator und der Polymerisationskatalysator durch die gleiche Verbindung dargestellt werden, die aus den Verbindungen nach den Ansprüchen 1 bis 4 ausgewählt wird.

10. Verfahren nach Anspruch 9, **dadurch gekennzeichnet, dass** das Monomer aus den Epoxiden, insbesondere Propylenoxid, oder den cyclischen Estern, insbesondere den dimeren cyclischen Estern der Milch- und/oder Glykolsäure ausgewählt wird.

11. Polymere oder Copolymere, erhältlich nach einem Verfahren gemäß einem der Ansprüche 9 bis 10.

## Claims

1. The compounds of general formula 1 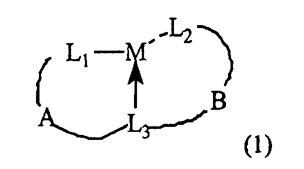 in which
M represents an element of groups 11, 12 or 14;
A and B represent, independently, a carbonated chain with 2 to 4 carbon atoms, optionally substituted by one of the following substituted or non-substituted radicals: alkyl, cycloalkyl or aryl, in which said substituent is a halogen atom, an alkyl, nitro or cyano radical;
L₁, L₂ and L₃ represent, independently, a group of formula -E₁₅(R₁₅)- in which
E₁₅ is an element of group 15 and
R₁₅ represents the hydrogen atom; one of the following substituted or non-substituted radicals: cycloalkyl or aryl, in which said substituent is a halogen atom, the alkyl, nitro or cyano radical; a radical of formula RR'R"E₁₄- in which E₁₄ is an element of group 14 and R, R' and R" represent, independently, the hydrogen atom or one of the following substituted or non-substituted radicals: alkyl, cycloalkyl, aryl, alkoxy, cycloalkoxy, aryloxy, alkylthio, cycloalkylthio or arylthio, in which said substituent is a halogen atom, the alkyl, nitro or cyano radical; or a radical of formula SO₂R'₁₅ in which R'₁₅ represents a halogen atom, an alkyl, haloalkyl or aryl radical optionally substituted by one or more substituents chosen from the alkyl, haloalkyl radicals and halogen.

2. The compounds of general formula 1 as defined in claim 1, **characterized in that**
M represents a tin or zinc atom;
A and B represent, independently, a carbonated chain of 2 to 4 carbon atoms, and in particular a carbonated chain of 2 carbon atoms;
L₁, L₂ and L₃ represent, independently, a radical of formula -E₁₅(R₁₅)- in which E₁₅ is a nitrogen or phosphorus atom and R₁₅ represents a radical of formula RR'R"E₁₄- in which E₁₄ represents a carbon or silicon atom and R, R' and R" represent, independently, the hydrogen atom or an alkyl or aryl radical and preferably the hydrogen atom or an alkyl radical.

3. The compounds of general formula 1 as defined in one of claims 1 to 2, **characterized in that**
M represents a tin or zinc atom;
A and B represent, independently, a carbonated chain of 2 carbon atoms;
L₁, L₂ and L₃ represent, independently, a radical of formula -E₁₅(R₁₅)- in which E₁₅ is a nitrogen atom and R₁₅ represents a radical of formula RR'R"E₁₄- in which E₁₄ represents a carbon or silicon atom and R, R' and R" represent, independently, the hydrogen atom or a methyl, ethyl, propyl or isopropyl radical.

4. The compounds of general formula 1 as defined in one of claims 1 to 3 and corresponding to the following formulae:
- [(Me₂CHNCH₂CH₂)₂NMe]Sn;
- [(Me₃SiNCH₂CH₂)₂NMe]Sn;
- [(Me₃SiNCH₂CH₂)₂NMe]Zn.

5. Preparation process for products of general formula 1 as defined in claim 1, **characterized in that** a product of formula I
(L₁-A-L₃-B-L₂)²⁻, 2Y⁺ (I)
in which L₁, A, L₃, B and L₂ have the meanings indicated in claim 1 and Y represents an organometallic group, a metal or the hydrogen atom, is reacted with a product of formula II
MZ₁Z₂ (II)
in which M has the meanings indicated in claim 1 and Z₁ and Z₂ represent, independently, a parting group, in order to obtain a product of formula 1.

6. Use of products of formula 1 as defined in any one of claims 1 to 4, as a polymerization or copolymerization catalyst.

7. Use according to claim 6 for the polymerization or copolymerization of heterocycles, in particular epoxides such as propylene oxide.

8. Use according to claim 6, for the polymerization or copolymerization of cyclic esters, in particular the dimer cyclic esters of lactic and/or glycolic acid.

9. Preparation process for block or random copolymers, or for polymers which consists in introducing one or more monomers, a polymerization catalyst and optionally a polymerization solvent, at a temperature comprised between ambient temperature and 250°C for 1 to 300 hours, said process **characterized in that** the chain initiator and the polymerization catalyst are represented by the same compound which is chosen from the compounds according to claims 1 to 4.

10. Process according to claim 9, **characterized in that** the monomer is chosen from the epoxides, and in particular propylene oxide, or cyclic esters, and in particular the dimer cyclic esters of lactic and/or glycolic acid.

11. Polymers or copolymers which may be obtained by the implementation of a process according to one of claims 9 to 10.
